# EUROPEAN PATENT SPECIFICATION

(11) **EP 3 441 789 B1**
(45) Date of publication and mention of the grant of the patent: **21.10.2020**
(21) Application number: 17185186.8
(22) Date of filing: 07.08.2017
(51) Int. Cl.: G01S 17/89, G01S 7/00

(54) **SYSTEM AND METHOD FOR PROCESSING DATA AND A USER DEVICE FOR PRE-PROCESSING DATA**
SYSTEM UND VERFAHREN ZUR DATENVERARBEITUNG UND EINE BENUTZERVORRICHTUNG ZUR VORVERARBEITUNG VON DATEN
SYSTÈME ET PROCÉDÉ DE TRAITEMENT DE DONNÉES ET DISPOSITIF D'UTILISATEUR PERMETTANT DE PRÉTRAITER DES DONNÉES

(43) Date of publication of application: 13.02.2019
(73) Proprietor: Vestel Elektronik Sanayi ve Ticaret A.S., 45030 Manisa (TR)
(72) Inventor: KÍRÍSKEN, Barbaros, 45030 Manisa (TR)
(74) Representative: Flint, Adam

(56) References cited:
- EP-A1- 2 923 642
- DE-A1-102013 100 177
- US-A1- 2003 137 449
- US-A1- 2014 071 234
- H Hui: "Deformation monitoring and modeling based on LiDAR data for slope stability assessment", Doctoral Thesis RWTH Aachen University RWTH Publications, 16 July 2014 (2014-07-16), pages i-175, XP055375655, Retrieved from the Internet: URL:http://publications.rwth-aachen.de/rec ord/229874/files/4584.pdf [retrieved on 2017-05-24]

## Description

### Technical Field

The present disclosure relates to a system and method of processing data and a user device for pre-processing data.

### Background

It is known in the art that some types of processing and calculations can only be performed on powerful computing devices. For such calculations, it is often necessary to first collect some preliminary data at a less powerful computer device. This data is submitted to the more powerful computing device which then performs the calculation. Typically, all of the preliminary data is first captured, and then all of this data is transmitted to the powerful computing device. This results in an inefficient use of time being taken in completing the calculation.

EP2923642A1 discloses a multi-application-transceiver device. A signal transceiver receives a reflected signal in response to an original signal sent by the signal transceiver. The reflected signal is reflected from at least one target object. A digital signal processor component pre-processes the reflected signal using an alterable rule engine with a received rule set to discriminate a state in change of the at least one target object against an earlier state of the at least one target object. A middleware component communicates with at least one remote computing device wherein communicate includes to send the pre-processed signal to a remote computing device.

US2014071234A1 discloses data capture of objects and/or an environment. A user can capture time-indexed three-dimensional depth data using one or more portable data capture devices that can capture time indexed colour images of a scene with depth information and location and orientation data. The data capture devices may be configured to capture a spherical view of the environment around the data capture device.

The dissertation "Deformation monitoring and modeling based on LiDAR data for slope stability assessment" by Hui Hu, RWTH Aachen University, RWTH Publications, discloses use of a terrestrial laser scanner to collect high resolution point cloud data from a fresh cut high slope in sandy and clayey soils in an open pit mine. A conversion tool is disclosed for transferring a LiDAR data-based 3D geological model into a 3D geotechnical model for numerical simulation.

### Summary

According to a first aspect disclosed herein, there is provided a system comprising: a user device and a computing device, the user device comprising a light source for emitting light and a light receiver for receiving light so as to generate image data for an object which reflects light emitted by the light source and which is received by the light receiver, the user device being configured to perform pre-processing of the image data comprising creating a 3D triangular mesh image for the object from the image data and to transmit the pre-processed image data for the 3D triangular mesh image to the computing device; and the computing device being configured to receive the pre-processed data for the 3D triangular mesh image from the user device and to model a surface of the object captured by the image data based on the received triangular mesh image data.

In an example, the computing device comprises at least one server and the user device and the computing device are arranged to communicate with each other over a network.

In an example, the user device is configured to generate data for inputting to a finite element analysis module and the computing device comprises a finite element analysis module which is configured to perform the finite element analysis using the pre-processed data received from the user device.

In an example, the user device is configured to generate data for inputting to a simulation optimization module, and the computing device comprises a simulation optimization module which is configured to execute the simulation optimization algorithm using the pre-processed data received from the user device.

In an example, the user device is arranged to carry out a time-of-flight analysis of the emitted and reflected light to determine the 3D shape of the object.

In an example, the user device is configured so that the light emitted by the light source is structured light. The user device is configured to determine the 3D shape of the object on the basis of structured light reflected from the object and received at the light receiver.

In an example, the user device is operable to generate image data for a second of a plurality of images whilst a first of the plurality of images is being pre-processed at the user device.

According to a second aspect disclosed herein, there is provided a user device configured to generate and/or obtain data for processing at computing device, the user device comprising: an interface operable to communicatively couple to a computing device; a light source for emitting light for illuminating an object; a light receiver for receiving light emitted by the light source and reflected by said object; a processor configured to generate image data by generating a point cloud for the object based on the light received at the light receiver and to perform pre-processing of the image data comprising creating a 3D triangular mesh image for the object from the generated point cloud; and a transmitter configured to transmit the pre-processed image data for the 3D triangular mesh image to the computing device.

In an example, the input device is arranged to generate and/or obtain a first set of data and a second set of data; and the processor is configured to pre-process the first set of data whilst the input device is generating and/or obtaining the second set of data.

According to a third aspect disclosed herein, there is provided a method of processing data, the method comprising:
a user device emitting light towards an object;
the user device receiving light emitted by the user device and reflected by the object so as to generate image data for the object;
the user device performing pre-processing of the image data comprising creating a 3D triangular mesh image for the object from the image data;
the user device transmitting the pre-processed image data for the 3D triangular mesh image to a computing device; and
the computing device receiving the pre-processed data for the 3D triangular mesh image from the user device and modelling a surface of the object captured by the image data based on the received triangular mesh image data.

### Brief Description of the Drawings

To assist understanding of the present disclosure and to show how embodiments may be put into effect, reference is made by way of example to the accompanying drawings in which:
Figure 1 shows schematically an example of an environment containing a plurality of objects that a user intends to generate a 3D model of;
Figure 2 shows schematically a side view of a user device that may be used to generate and/or obtain data;
Figure 3 shows schematically different respective portions of an environment that may be scanned by a 3D scanner; and
Figure 4 shows schematically a flow chart for pre-processing and processing data at a user device and computing device respectively.

### Detailed Description

It is known in the art that certain calculations require processing power that is not available on typical general-purpose computing devices. For example, devices such as smartphones, tablets, laptops, personal computers, etc. may be limited in the speed at which they can process data and the amount of data that they are able to handle. For more complex calculations, it may be necessary to submit data to a computing device having a higher level of computing performance. This computing device can be used to perform the full calculation based on an initial set of data provided by the general-purpose computing device.

Finite element analysis (FEA) is one example of a calculation that may require a higher level of computing performance (i.e. higher computational power). Finite element analysis may be used for example to predict how a structure will react to real-world forces, vibration heat, fluid flow and other physical effects. A user may design the structure at their user device and transmit the design to e.g. a server. The server may then model the structure as a series of finite elements and determine how each of them will react to certain physical effects. Generally, finite element analysis is used to determine a numerical solution to a problem (e.g. where the solution cannot be determined analytically).

Another example of a calculation that may require a higher level of computing performance is the solving of an optimization problem. For example, in some circumstances, it may be necessary to simulate a process or an event in order to determine the optimum conditions under which that process or event will occur. The optimization problem may involve solving a minimum cost problem. The user device 105 may provide the server with an indication of the conditions under which the process is to occur. The server may then provide data to the user device 105, from which the optimal conditions can be identified. Generally, these types of problems are solved by simplex or linear programming or non-linear programming.

In a further example, a computing device may be used to generate a three dimensional model of one or more objects in an environment. The user device may include for example, a camera device, or a scanning device that enables a user to capture images of the objects in the environment. These images may be provided to a server, which uses them to generate a three-dimensional model of the objects in the image. The three-dimensional model can be sent back to the user device, and rendered accordingly. This may be useful, for example, where a user intends to manipulate the objects in a virtual environment. For example, to see how the objects would look in different positions and/or orientations.

In known systems, computationally intensive calculations are performed in a time-inefficient manner. For example, typically, a user device first collects all of the data that is to be sent to and subsequently processed by a high performance server. Once all of this data has been collected, the user device transmits the data to the server. The server then processes the data in the manner desired by the user. It will be appreciated that, whilst the user device is collecting the data, the server sits idle. Hence the processing at the server is delayed by however long the data-acquiring process takes. In some examples, the data-acquiring process may take a relatively long time. For example, a user may need to spend up to two hours scanning the environment with a scanning device in order to obtain enough data from which a 3D model can be generated. A computing device may require a further six hours to process this data and generate the 3D model. This results in the whole process taking 8 hours to complete from start to finish, with the server not being able to perform any processing for two of those hours.

In accordance with the present disclosure, there is provided a user device, system and method for completing computationally intensive calculations in a more time-efficient manner.

To facilitate understanding, a system in accordance with the present disclosure will now be described. The system comprises a user device communicatively coupled to a computing device. The user device may include, for example, a smartphone, tablet, personal computer, laptop etc. The user device may be communicatively coupled to the computing device via a communications network, such as the internet. Although referred to in the singular, the computing device may comprise one or more computing devices. In some examples, the computing device may comprise a network of remote servers hosted on the internet. In other examples, the user device may be physically coupled to the computing device. For example, the computing device may include a USB stick-based computing device that is configured to receive data from the user device to which it is connected.

The user device is configured to generate and/or obtain data that is to be processed by the computing device. This data may correspond, for example to data that is to be input to a finite element analysis method and/or a simulation optimization algorithm. Additionally or alternatively, this data may correspond to data that is to be used to generate a 3D model of one or more objects in an environment. Generally, the data generated and/or obtained at the user device corresponds to data that is to be processed by a computing device having a higher level of computing performance.

The user device comprises one or more processors configured to perform pre-processing of the data that is generated and/or obtained at the user device. The pre-processing may correspond to a simplified version of a processing step that would have otherwise occurred at the computing device. Alternatively, the pre-processing step may include an initial step that would have been performed at the computing device (i.e. it may not be a simplified version of the initial step). The user device comprises a transmitter for transmitting the pre-processed data to the computing device. The pre-processed data is in a form that enables the computing device to process the data more quickly. For example, the computing device may not need to complete a first step of processing because that step has already been performed by the user device as part of the pre-processing. The pre-processing step will generally correspond to a step that is performed as part of the complex calculation. For example, the pre-processing step may be different from e.g. a file conversion.

Pre-processed data may be defined in terms of a computational complexity and/or a computational time metric. For example, pre-processed data may correspond to data that has been processed in real-time or near real-time, e.g. in less than 20 ms. The computational complexity of the processing may be indicated with a computational complexity index (which may indicate the time taken to pre-process the data). Generally, pre-processed data will have a higher computational complexity index than non-pre-processed data, but a lower computational complexity index than data that is processed at the computing device.

The computing device comprises a receiver for receiving the pre-processed data from the user device. The computing device also comprises one or more processors for processing the pre-processed data. The one or more processors are configured to execute program instructions stored in memory at the computing device. The program instructions may be provided in a software package installed at the computing device. For example, a finite element analysis module or software optimization module may be installed at the computing device. In some examples, 3D modelling software may be installed at the computing device. The computing device is configured to use any one (or more) of these to process the pre-processed data received from the user device.

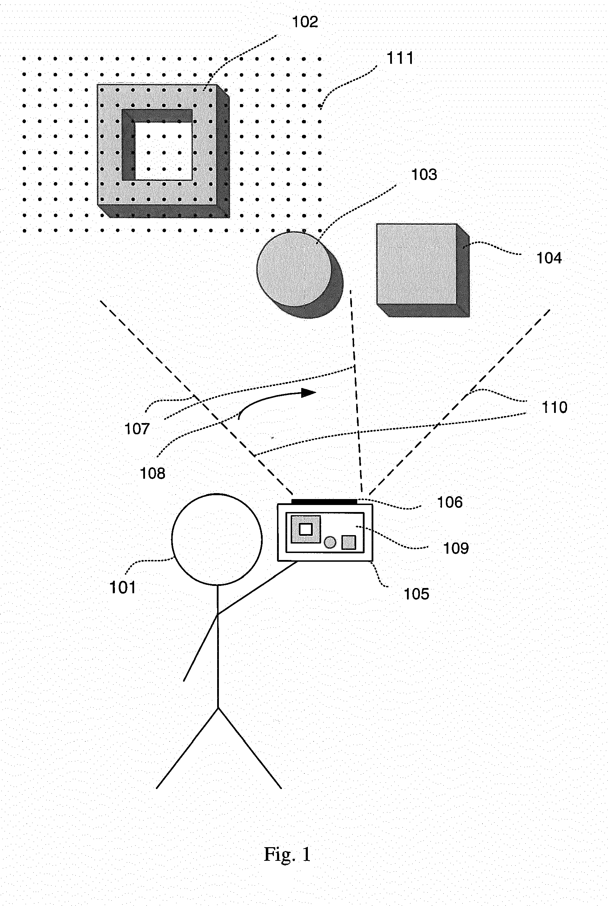

Referring now to Figure 1, this schematically shows an environment 100 containing one or more objects for which a user 101 intends to generate a three-dimensional model. A first object 102, second object 103, and third object 104 are shown at different respective locations in the environment 100. In the simplified example shown in Figure 1, the first object 102 is a square frame, the second object 103 is a cylinder and a third object 104 is a cube. It will be appreciated that the environment 100 may contain greater or fewer objects and that these objects may have shapes that are different from those shown in Figure 1 and which in practice will be complex 3D shapes. The term 3D model or 3D image is used herein to refer to a 2D image in which the objects are represented in three dimensions, i.e. graphically.

The user 101 is associated with a user device 105. In the example shown in Figure 1, the user device 105 is tablet device. The user device 105 may comprise a light emitter and a light receiver for detecting and imaging a 3D object in the environment 100. The combination of the light emitter and light receiver may be referred to as a 3D scanner 106. The 3D scanner 106 may be incorporated into the user device 105.

The 3D scanner 106 may include, for example, a processor configured to perform a time-of-flight analysis. In such a case, a signal (for example in infrared) is transmitted at a 3D object in the environment 100 and the time of flight for the reflected signal to be detected by the light receiver is used to obtain information about the distance of that portion of the 3D object from the sensor. This is repeated with a number of transmitted signals to build up a 3D map of the surface of the 3D object. In another example, the 3D scanner 106 may use so-called structured light to detect 3D objects in the environment 100. In this, a known pattern, such as a grid, is projected onto the 3D object. The grid is distorted by the 3D shape of the object. That grid can then be viewed by a camera (or, more generally, a light receiver) and analysed to obtain a map of the 3D surface of the 3D object. In all examples, the 3D scanner 106 is said to generate image data, since the light received at the 3D scanner 106 can be used to generate a 3D model of one or more objects in the environment 100.

The field of view of the 3D scanner 106 may be smaller than the field of view containing the objects that are to be scanned. This field of view is indicated at 107 in Figure 1. Hence, a user 101 may be required to perform multiple scanning operations in order to generate image data for all of the objects. In some examples, the user device 105 may be configured to perform a continuous scanning operation. For example, a user 101 may be able to scan all of the objects in the environment 100 by rotating and/or moving their user device 105 across the objects. This is shown in Figure 1, where user 101 is shown moving their user device 105 from left to right, i.e. in a scanning direction 108. In other examples, the user device 105 may be configured to perform a discrete scanning operation. For example, the user 101 may be required to provide a user 101 input at the user device 105 each time a portion of the environment 100 is to be scanned by the 3D scanner 106.

Whilst the above has been described in terms of scanning objects, it will be appreciated that, in some examples it may be desirable to scan the space between the objects. For example, a user 101 may intend to preserve the relative distances between the objects in the 3D model that is generated.

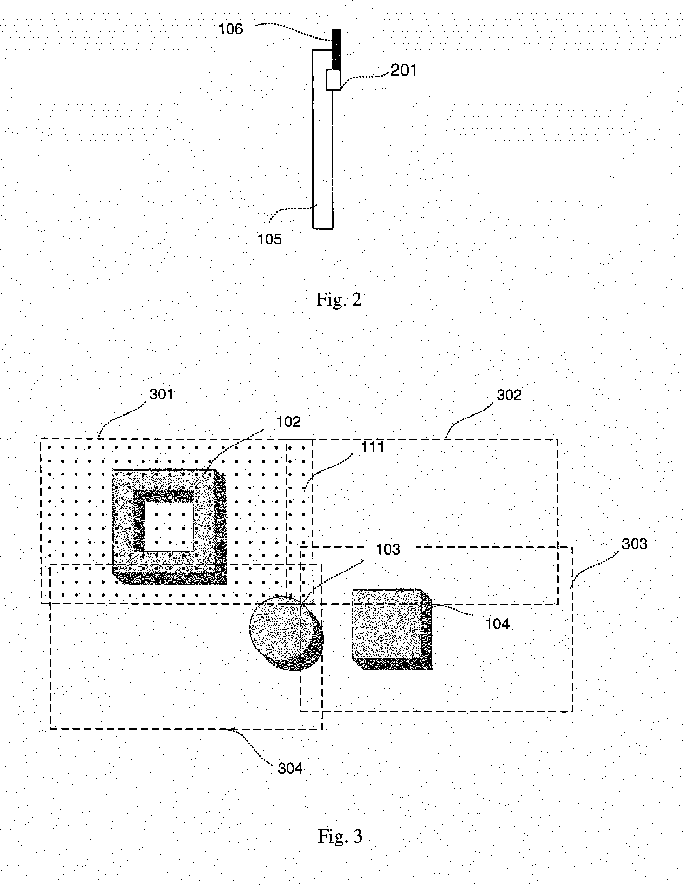

The user device 105 may also comprise a camera device (not shown). For example, photogrammetry or stereo-photogrammetry may be used to detect the 3D objects in the environment 100. In this, multiple images are captured of the object from multiple perspectives. By identifying common points in each of the images, a map of the 3D surface of the 3D object can be obtained. The camera device may be, for example, an RGB camera. In some examples, the camera device is not used to detect the 3D objects in the environment 100. Rather, the camera device is used to provide colour information regarding the objects that have been detected by the 3D scanner 106. For example, the camera device may be operable to capture one or colour images of the objects in the environment 100. These colour images may be provided to the computing device, along with the image data generated by the 3D scanner 106. The computing device can then use this colour information to generate a correctly coloured 3D model of the objects in the environment 100. Figure 2 schematically shows a side view of the user device 105 shown in Figure 1, but with an associated camera device 201.

Returning to Figure 1, the user device 105 comprises a screen 109. The screen 109 may be, for example, a touchscreen 109. The screen 109 may be used to display information to the user 101. For example, the screen 109 may display a preview of an image of a portion of the environment 100. The image may correspond to the portion of the environment 100 that falls within the field of view of a camera device associated with the user device 105. This may provide an indication as to whether an object is within the field of view of the 3D scanner 106. For example, reflections of the light emitted by the 3D scanner 106 may be visible in the preview image displayed at the screen 109.

In some examples, the field of view of the 3D scanner 106 may be the same as or similar to the field of view of the camera device, for example, in the case that the camera device is used to perform the 3D scanning operation. In other examples, the field of view of the 3D scanner 106 may be different from the field of view of the camera device. For example, the 3D scanner 106 may have a narrower field of view. In Figure 1, the field of view of the camera device is indicated at 110. In such a situation, the screen 109 may be used to provide an indication of any objects that have been detected by the 3D scanner 106. This indication may include, for example, a low-resolution two-dimensional image of the objects that have been detected so far and their locations relative to one another. The field of view of the 3D scanner 106 is defined as the solid angle through which the light receiver is able to detect light.

The screen 109 may provide an input for initiating the scanning of objects with the 3D scanner 106. For example, the screen 109 may be configured to display a button, which, upon receiving user 101 input, causes the 3D scanner 106 to commence emitting light. Similarly, the screen 109 may provide an input for pausing or ending the scanning operation. Once a user 101 has indicated that the scanning operation is complete, the user device 105 may automatically pre-process the data and transmit the pre-processed data to the computing device. Alternatively, separate user 101 inputs may be required to indicate that the scanning operation is complete, and to initiate the pre-processing of the data and its subsequent transmission to the computing device.

In the example shown in Figure 1, the user 101 is scanning the first object 102 with their user device 105. A grid of points 111 is shown as overlaying the first object 102. This grid of points 111 corresponds to a point cloud, where each point represents a point in 3D space detected by the 3D scanner 106. These points may be detected using light emitted by the 3D scanner 106, as described previously. Each point in the point cloud may be defined in terms of an X, *Y* and Z coordinate. The user device 105 may be configured to store the point cloud in memory at the user device 105 as a data file.

The grid 111 may correspond to the maximum size of a point cloud on which the user device 105 is able to perform pre-processing. For example, the 3D scanner 106 may be limited to generating smaller point clouds, so that pre-processing can be performed on a first point cloud whilst the user device generates a second point cloud. This ensures that at least some of the data can be pre-processed and sent to the computing device before all of the objects in the environment 100 have been scanned by the 3D scanner 106. The size of the point cloud may be determined, for example, based on the processing capabilities of the user device 105 and the total amount of data that is to be collected. If, for example, more processing resources become available at the user device, the user device may cause the 3D scanner 106 to emit light over a larger area, thereby generating a larger point cloud. In some examples, the size of the point cloud may be limited by the field of view of the 3D scanner 106.

Figure 3 schematically shows four portions of the environment 100 that have been scanned with the 3D scanner 106. Each portion corresponds to a different portion of the environment 100 for which a point cloud can be generated. In the example shown in Figure 1, four scanning operations may be required in order to obtain enough point cloud data to generate a 3D model of objects 102, 103 and 104 in environment 100. The four portions are indicated with respective windows 301, 302, 303 and 304.

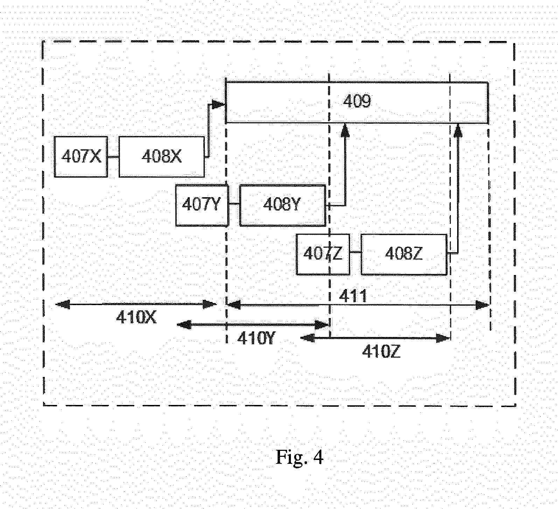

Figure 4 schematically shows an example of a process in which the data generated at the user device 105 is pre-processed and transmitted to the computing device 409.

In a first step 407X, the user device 105 generates and/or obtains a first portion of the data that is to be processed by the computing device 409. This first portion of the data may correspond, for example, to a point cloud that was obtained by scanning a first portion of the environment 100 with the 3D scanner 106. This portion may include the points on the surface of a first object 102 or a portion of that object 102 (i.e. depending on the field of view of the 3D scanner 106).

At a second step 408X, the user device 105 performs pre-processing of the first portion of data generated and/or obtained by the user device 105. This processing is performed, for example, by one or more processors at the user device 105. The pre-processing may involve converting a first point cloud to a triangular or polygonal mesh. The triangular or polygonal mesh may correspond to a low resolution 3D image made up of contiguous triangles or polygons. The time taken to generate and/or obtain the data and to perform the pre-processing may be characterised by a first time interval 410X. Generally, this time interval depends on the size of the first portion of data. For the purpose of illustration, in the example shown in Figure 1, this time interval may be approximately twenty minutes. Once pre-processing of the first portion of data has completed, the pre-processed first data is transmitted to the computing device 409.

At a third step 407Y, the user device 105 generates and/or obtains a second portion of the data that is to be processed by the computing device 409. This second portion of the data may correspond, for example, to a second point cloud that was obtained by scanning a second (i.e. different) portion of the environment 100 with the 3D scanner 106. This portion may include different points on the surface of the object 110 or points on the surface of a different object, such as object 109 and/or 108.

As can be seen in Figure 4, the second portion of data may be obtained whilst the user device 105 is pre-processing the first portion of data. That is, pre-processing the first portion of data does not preclude the user 101 from using the user device 105 to generate and/or obtain a second portion of data. The pre-processing may occur in the background while the user 101 scans the next portion of the environment 100 with the 3D scanner 106. Once the user device 105 has completed pre-processing of the first portion of data, this pre-processed data is transmitted to the computing device 409. The transmission of this data may also occur whilst the user 101 is generating and/or obtaining the second portion of data. Generally, each subsequent portion of data may be captured whilst the previous portion of data is being pre-processed at the user device 105.

At a fourth step 408Y, the user device 105 performs pre-processing of the second portion of data generated and/or obtained by the user device 105. Again, this may involve, for example, converting a second point cloud to a triangular or polygonal mesh. The time taken to generate and/or obtain the second portion of data and to pre-process it may be characterised by a second time interval 410Y. Again, for the example shown in Figure 1 and for the purposes of illustration, this second time interval 410Y may correspond to twenty minutes. Generally, the time taken to capture each portion of data and pre-process the data is less than the time that would have been required to capture all of the data (i.e. prior to pre-processing).

In some examples, the computing device 409 processes the first portion of pre-processed data whilst the user device 105 performs capture and/or pre-processing of the second portion of data. One advantage of this is that the computing device 409 does not need to sit idle whilst the user device 105 is capturing data. It also means that, as each successive portion of pre-processed data is received at the computing device 409, there will be less overall processing for the computing device 409 to complete. This is because the computing device 409 will have already performed some of the processing needed to generate the 3D model. As a result, the processing performed at the computing device 409 may complete more quickly. In a typical example, the computing device 409 may take four hours to generate the 3D model. This differs from the six hours that would expected for a known computing device that waits until it has received all of the data before commencing any pre-processing or further processing of the data.

In Figure 4, step 407Z represents an n^{th} step in which an n^{th} portion of data has been generated and/or obtained at the user device 105. As can be seen in Figure 4, this step occurs whilst the previous portion of data (i.e. the second portion, where n = 3) is being pre-processed by the user device 105. At step 408Z the user device 105 performs pre-processing of the n^{th} portion of data. Again, this may involve, for example, converting an n^{th} point cloud to a triangular or polygonal mesh. The time taken to generate and/or obtain the n^{th} portion of data and to pre-process it may be characterised by time interval 410Z. In an example, this time interval may be twenty minutes. During this time interval, the computing device 409 may process any pre-processed data that has previously been received at the computing device 409. In an alternative example, the computing device 409 waits until all of the pre-processed data has been received, before commencing any processing of it.

As can be seen in Figure 4, the time taken for the computing device 409 to complete its processing of the pre-processed data received from the user device 105 is characterised by time interval 411. This time interval may include the time taken for the computing device 409 to complete the processing of any other data received from the user device 105. This data may include, for example, any colour images received from the user device 105.

In an example, the computing device 409 may be configured to receive the triangular meshes created from each respective point cloud obtained by the user device 105. The computing device 409 may be configured to wait until each of these has been received before commencing processing of the pre-processed data. Alternatively, the computing device 409 may be configured to perform partial processing of the triangular meshes as and when they are received from the user device 105. For example, the computing device 409 may generate a first 3D model of a first object (or portion thereof), based on a first portion of received pre-processed data. The computing device 409 may then perform further modelling of the object, each time pre-processed data relating to that object is received from the user device 105.

In any case, the computing device 409 generates a 3D model of the one or more objects that were scanned by the 3D scanner 106. This may involve, for example, manipulating the triangular mesh associated with a given object so as to add surface detail to the image of the object. Surface texture may then be rendered on the image of the object. Techniques for modelling the surface of a 3D object using triangular meshes and adding surface textures and the like are known in the art and any of these may be used by the computing device 409 to model the scanned objects.

For the objects shown in Figure 1, it may take 4 hours to complete the processing of the triangular meshes received from the user device 105. This is two hours shorter than would otherwise be expected in a known system, where all of the data must first be collected by the user device 105 before it is submitted to the computing device 409 for the computing device 409 to carry out the entirety of the processing (including the pre-processing which, in this example, is carried out at the user device 105).

Once the 3D model of the one or more objects has been generated by the computing device 409, this may be transmitted back to the user device 105. The 3D model may be transmitted in a form that can be rendered and viewed at a display of the user device 105. The user device 105 may have specialist software installed at the user device 105 through which the modelled objects can be manipulated in a virtual environment 100.

Whilst the embodiments described above relate to generating a 3D model of one or more objects, it will be appreciated that this need not be the only context in which the system, user device and method may be used. For example, the same principles may apply where, for example, the process relates to performing a finite element method or an optimization simulation.

It will be understood that the processor or processing system or circuitry referred to herein may in practice be provided by a single chip or integrated circuit or plural chips or integrated circuits, optionally provided as a chipset, an application-specific integrated circuit (ASIC), field-programmable gate array (FPGA), digital signal processor (DSP), graphics processing units (GPUs), etc. The chip or chips may comprise circuitry (as well as possibly firmware) for embodying at least one or more of a data processor or processors and a digital signal processor or processors, which are configurable so as to operate in accordance with the exemplary embodiments. In this regard, the exemplary embodiments may be implemented at least in part by computer software stored in (non-transitory) memory and executable by the processor, or by hardware, or by a combination of tangibly stored software and hardware (and tangibly stored firmware).

## Claims

1. A system comprising:
a user device (105) and a computing device (409), the user device (105) and the computing device (409) being capable of communicating with each other;
the user device (105) comprising a light source for emitting light and a light receiver for receiving light so as to generate image data for an object (102, 103, 104) which reflects light emitted by the light source and which is received by the light receiver, the user device (105) being configured to perform pre-processing of the image data comprising creating a 3D triangular mesh image for the object (102, 103, 104) from the image data and to transmit the pre-processed image data for the 3D triangular mesh image to the computing device (409); and
the computing device (409) being configured to receive the pre-processed data for the 3D triangular mesh image from the user device (105) and to model a surface of the object (102, 103, 104) captured by the image data based on the received triangular mesh image data.

2. A system according to claim 1, wherein the computing device (409) comprises at least one server and the user device (105) and the computing device (409) are arranged to communicate with each other over a network.

3. A system according to claim 1 or claim 2, wherein the user device (105) is configured to generate data for inputting to a finite element analysis module and wherein the computing device (409) comprises a finite element analysis module which is configured to perform the finite element analysis using the pre-processed data received from the user device (105).

4. A system according to any of claims 1 to 3, wherein the user device (105) is configured to generate data for inputting to a simulation optimization module, and wherein the computing device (409) comprises a simulation optimization module which is configured to execute the simulation optimization algorithm using the pre-processed data received from the user device (105).

5. A system according to any of claims 1 to 4, wherein the user device (105) is arranged to carry out a time-of-flight analysis of the emitted and reflected light to determine the 3D shape of the object (102, 103, 104).

6. A system according to any of claims 1 to 5, wherein the user device (105) is configured so that the light emitted by the light source is structured light and is configured to determine the 3D shape of the object (102, 103, 104) on the basis of structured light reflected from the object (102, 103, 104) and received at the light receiver.

7. A system according to any of claims 1 to 6, wherein the user device (105) is operable to generate image data for a second of a plurality of images whilst a first of the plurality of images is being pre-processed at the user device (105).

8. A user device (105) configured to generate and/or obtain data for processing at computing device (409), the user device (105) comprising:
an interface operable to communicatively couple to a computing device (409);
a light source for emitting light for illuminating an object (102, 103, 104);
a light receiver for receiving light emitted by the light source and reflected by said object (102, 103, 104);
a processor configured to generate image data by generating a point cloud for the object (102, 103, 104) based on the light received at the light receiver and to perform pre-processing of the image data comprising creating a 3D triangular mesh image for the object (102, 103, 104) from the generated point cloud; and
a transmitter configured to transmit the pre-processed image data for the 3D triangular mesh image to the computing device (409).

9. A user device (105) according to claim 8, wherein the input device is arranged to generate and/or obtain a first set of data and a second set of data; and
wherein the processor is configured to pre-process the first set of data whilst the input device is generating and/or obtaining the second set of data.

10. A user device according to claim 8 or claim 9, wherein the user device (105) is arranged to carry out a time-of-flight analysis of the emitted and reflected light to determine the 3D shape of the object (102, 103, 104).

11. A user device according to any of claims 8 to 10, wherein the user device (105) is configured so that the light emitted by the light source is structured light and is configured to determine the 3D shape of the object (102, 103, 104) on the basis of structured light reflected from the object (102, 103, 104) and received at the light receiver.

12. A method of processing data, the method comprising:
a user device (105) emitting light towards an object (102, 103, 104);
the user device (105) receiving light emitted by the user device and reflected by the object (102, 103, 104) so as to generate image data for the object (102, 103, 104);
the user device (105) performing pre-processing of the image data comprising creating a 3D triangular mesh image for the object (102, 103, 104) from the image data;
the user device (105) transmitting the pre-processed image data for the 3D triangular mesh image to a computing device (409); and
the computing device (409) receiving the pre-processed data for the 3D triangular mesh image from the user device (105) and modelling a surface of the object (102, 103, 104) captured by the image data based on the received triangular mesh image data.

13. A method according to claim 12, wherein the user device (105) generates a first set of image data and a second set of image data, wherein the user device (105) pre-processes the first set of image data whilst generating the second set of image data.

14. A method according to claim 12 or claim 13, the user device (105) carrying out a time-of-flight analysis of the emitted and reflected light to determine the 3D shape of the object (102, 103, 104).

15. A method according to any of claims 12 to 14, wherein the light emitted by the user device (105) is structured light and the user device (105) determines the 3D shape of the object (102, 103, 104) on the basis of structured light reflected from the object (102, 103, 104) and received at the user device (105).

## Patentansprüche

1. System, aufweisend:
ein Nutzergerät (105) und ein Computergerät (409), wobei das Nutzergerät (105) und das Computergerät (409) miteinander kommunizieren können,
wobei das Nutzergerät (105) eine Lichtquelle zum Emittieren von Licht und einen Lichtempfänger zum Empfangen von Licht aufweist, um Bilddaten für ein Objekt (102, 103, 104) zu erzeugen, das von der Lichtquelle emittiertes und vom Lichtempfänger empfangenes Licht reflektiert, wobei das Nutzergerät (105) ausgestaltet ist, um ein Vorverarbeiten der Bilddaten durchzuführen, das ein Erzeugen eines 3D-Dreiecksnetz-Bildes für das Objekt (102, 103, 104) aus den Bilddaten aufweist, und die vorverarbeiteten Bilddaten für das 3D-Dreiecksnetz-Bild an das Computergerät (409) zu übermitteln; und
wobei das Computergerät (409) ausgestaltet ist, um die vorverarbeiteten Bilddaten für das 3D-Dreiecksnetz-Bild vom Nutzergerät (105) zu empfangen und eine Oberfläche des durch die Bilddaten erfassten Objekts (102, 103, 104) basierend auf den empfangenen Dreiecksnetz-Bilddaten zu modellieren.

2. System nach Anspruch 1, bei welchem das Computergerät (409) wenigstens einen Server aufweist und das Nutzergerät (105) und das Computergerät (409) ausgestaltet sind, um miteinander über ein Netzwerk zu kommunizieren.

3. System nach Anspruch 1 oder Anspruch 2, bei welchem das Nutzergerät (105) ausgestaltet ist, um Daten zum Eingeben in ein Finite-Elemente-Analysemodul zu erzeugen, und das Computergerät (409) ein Finite-Elemente-Analysemodul aufweist, das konfiguriert ist, um die Finite-Elemente-Analyse unter Verwendung der vom Nutzergerät (105) empfangenen vorverarbeiteten Daten durchzuführen.

4. System nach einem der Ansprüche 1 bis 3, bei welchem das Nutzergerät(105) ausgestaltet ist, um Daten zum Eingeben in ein Simulationsoptimierungsmodul zu erzeugen, und das Computergerät (409) ein Simulationsoptimierungsmodul aufweist, das konfiguriert ist, um den Simulationsoptimierungsalgorithmus unter Verwendung der vom Nutzergerät (105) empfangenen vorverarbeiteten Daten auszuführen.

5. System nach einem der Ansprüche 1 bis 4, bei welchem das Nutzergerät (105) ausgestaltet ist, um eine Laufzeitanalyse des emittierten und reflektierten Lichts auszuführen, um die 3D-Form des Objekts (102, 103, 104) zu bestimmen.

6. System nach einem der Ansprüche 1 bis 5, bei welchem das Nutzergerät (105) so konfiguriert ist, dass das von der Lichtquelle emittierte Licht strukturiertes Licht ist, und konfiguriert ist, um die 3D-Form des Objekts (102, 103, 104) auf Basis des vom Objekt (102, 103, 104) reflektierten und am Lichtempfänger empfangenen strukturierten Lichts zu bestimmen.

7. System nach einem der Ansprüche 1 bis 6, bei welchem das Nutzergerät (105) fähig ist, um Bilddaten für ein zweites von mehreren Bildern zu erzeugen, während ein erstes der mehreren Bilder am Nutzergerät (105) vorverarbeitet wird.

8. Nutzergerät (105), ausgestaltet zum Erzeugen und/oder Erhalten von Daten zum Verarbeiten an einem Computergerät (409), wobei das Nutzergerät (105) aufweist:
eine Schnittstelle zum kommunikativen Koppeln mit einem Computergerät (409);
eine Lichtquelle zum Emittieren von Licht zum Beleuchten eines Objekts (102, 103, 104);
einen Lichtempfänger zum Empfangen von von der Lichtquelle emittiertem und vom Objekt (102, 103, 104) reflektiertem Licht;
einen Prozessor, der konfiguriert ist, um Bilddaten durch Erzeugen einer Punktwolke für das Objekt (102, 103, 104) basierend auf dem am Lichtempfänger empfangenen Licht zu erzeugen und ein Vorverarbeiten der Bilddaten durchzuführen, das ein Erzeugen eines 3D-Dreiecksnetz-Bildes für das Objekt (102, 103, 104) aus der erzeugten Punktwolke aufweist; und
einen Sender zum Übermitteln der vorverarbeiteten Bilddaten für das 3D-Dreiecksnetz-Bild an das Computergerät (409).

9. Nutzergerät (105) nach Anspruch 8, bei welchem
die Eingabevorrichtung ausgestaltet ist, um einen ersten Datensatz und einen zweiten Datensatz zu erzeugen und/oder zu erhalten; und
der Prozessor konfiguriert ist, um den ersten Datensatz vorzuverarbeiten, während die Eingabevorrichtung den zweiten Datensatz erzeugt und/oder erhält.

10. Nutzergerät nach Anspruch 8 oder Anspruch 9, wobei das Nutzergerät (105) ausgestaltet ist, um eine Laufzeitanalyse des emittierten und reflektierten Lichts auszuführen, um die 3D-Form des Objekts (102, 103, 104) zu bestimmen.

11. Nutzergerät nach einem der Ansprüche 8 bis 10, wobei das Nutzergerät (105) so konfiguriert ist, dass das von der Lichtquelle emittierte Licht strukturiertes Licht ist, und konfiguriert ist, um die 3D-Form des Objekts (102, 103, 104) auf Basis des vom Objekt (102, 103, 104) reflektierten und am Lichtempfänger empfangenen strukturierten Lichts zu bestimmen.

12. Verfahren zum Verarbeiten von Daten, wobei das Verfahren aufweist:
ein Nutzergerät (105) emittiert Licht zu einem Objekt (102, 103, 104);
das Nutzergerät (105) empfängt vom Nutzergerät emittiertes und vom Objekt (102, 103, 104) reflektiertes Licht, um Bilddaten für das Objekt (102, 103, 104) zu erzeugen;
das Nutzergerät (105) führt ein Vorverarbeiten der Bilddaten durch, das ein Erzeugen eines 3D-Dreiecksnetz-Bildes für das Objekt (102, 103, 104) aus den Bilddaten aufweist;
das Nutzergerät (105) übermittelt die vorverarbeiteten Bilddaten für das 3D-Dreiecksnetz-Bild an ein Computergerät (409); und
das Computergerät (409) empfängt die vorverarbeiteten Bilddaten für das 3D-Dreiecksnetz-Bild vom Nutzergerät (105) und modelliert eine Oberfläche des durch die Bilddaten erfassten Objekts (102, 103, 104) basierend auf den empfangenen Dreiecksnetz-Bilddaten.

13. Verfahren nach Anspruch 12, bei welchem das Nutzergerät (105) einen ersten Satz von Bilddaten und einen zweiten Satz von Bilddaten erzeugt, wobei das Nutzergerät (105) den ersten Satz von Bilddaten vorverarbeitet, während es den zweiten Satz von Bilddaten erzeugt.

14. Verfahren nach Anspruch 12 oder Anspruch 13, wobei das Nutzergerät (105) eine Laufzeitanalyse des emittierten und reflektierten Lichts ausführt, um die 3D-Form des Objekts (102, 103, 104) zu bestimmen.

15. Verfahren nach einem der Ansprüche 12 bis 14, bei welchem das vom Nutzergerät (105) emittierte Licht strukturiertes Licht ist und das Nutzergerät (105) die 3D-Form des Objekts (102, 103, 104) auf Basis des vom Objekt (102, 103, 104) reflektierten und am Nutzergerät (1059 empfangenen strukturierten Lichts bestimmt.

## Revendications

1. Système comprenant :
un dispositif d'utilisateur (105) et un dispositif informatique (409), le dispositif d'utilisateur (105) et le dispositif informatique (409) étant capables de communiquer l'un avec l'autre ;
le dispositif d'utilisateur (105) comprenant une source de lumière pour émettre de la lumière et un récepteur de lumière pour recevoir de la lumière afin de générer des données d'image pour un objet (102, 103, 104) qui réfléchit la lumière émise par la source de lumière et qui est reçue par le récepteur de lumière, le dispositif d'utilisateur (105) étant configuré de manière à effectuer un prétraitement des données d'image consistant à créer une image de maillage triangulaire 3D pour l'objet (102, 103, 104) à partir des données d'image, et de manière à transmettre les données d'image prétraitées pour l'image de maillage triangulaire 3D au dispositif informatique (409) ; et
le dispositif informatique (409) étant configuré de manière à recevoir les données prétraitées pour l'image de maillage triangulaire 3D de la part du dispositif d'utilisateur (105), et de manière à modéliser une surface de l'objet (102, 103, 104) capturé par les données d'image sur la base des données d'image de maillage triangulaire reçues.

2. Système selon la revendication 1, dans lequel le dispositif informatique (409) comprend au moins un serveur, et dans lequel le dispositif d'utilisateur (105) et le dispositif informatique (409) sont agencés de manière à communiquer l'un avec l'autre via un réseau.

3. Système selon la revendication 1 ou 2, dans lequel le dispositif d'utilisateur (105) est configuré de manière à générer des données à entrer dans un module d'analyse par éléments finis, et dans lequel le dispositif informatique (409) comprend un module d'analyse par éléments finis qui est configuré de manière à effectuer l'analyse par éléments finis en utilisant les données prétraitées reçues de la part du dispositif d'utilisateur (105).

4. Système selon l'une quelconque des revendications 1 à 3, dans lequel le dispositif d'utilisateur (105) est configuré de manière à générer des données à entrer dans un module d'optimisation de simulation, et dans lequel le dispositif informatique (409) comprend un module d'optimisation de simulation qui est configuré de manière à exécuter l'algorithme d'optimisation de simulation en utilisant les données prétraitées reçues de la part du dispositif d'utilisateur (105).

5. Système selon l'une quelconque des revendications 1 à 4, dans lequel le dispositif d'utilisateur (105) est agencé de manière à effectuer une analyse du temps de vol de la lumière émise et réfléchie pour déterminer la forme 3D de l'objet (102, 103, 104).

6. Système selon l'une quelconque des revendications 1 à 5, dans lequel le dispositif d'utilisateur (105) est configuré de telle sorte que la lumière émise par la source de lumière est une lumière structurée, et configuré de manière à déterminer la forme 3D de l'objet (102, 103, 104) sur la base de la lumière structurée réfléchie par l'objet (102, 103, 104) et reçue au niveau du récepteur de lumière.

7. Système selon l'une quelconque des revendications 1 à 6, dans lequel le dispositif d'utilisateur (105) peut fonctionner pour générer des données d'image pour une deuxième image d'une pluralité d'images tandis qu'une première image de la pluralité d'images est en train d'être prétraitée au niveau du dispositif d'utilisateur (105).

8. Dispositif d'utilisateur (105) configuré de manière à générer et / ou obtenir des données à traiter au niveau d'un dispositif informatique (409), le dispositif d'utilisateur (105) comprenant :
une interface pouvant fonctionner pour se coupler en communication au dispositif informatique (409) ;
une source de lumière pour émettre de la lumière servant à éclairer un objet (102, 103, 104) ;
un récepteur de lumière pour recevoir de la lumière émise par la source de lumière et réfléchie par ledit objet (102, 103, 104) ;
un processeur configuré de manière à générer des données d'image en générant un nuage de points pour l'objet (102, 103, 104) sur la base de la lumière reçue au niveau du récepteur de lumière, et configuré de manière à effectuer un prétraitement des données d'image consistant à créer une image de maillage triangulaire 3D pour l'objet (102, 103, 104) à partir du nuage de points généré ; et
un transmetteur configuré de manière à transmettre les données d'image prétraitées pour l'image de maillage triangulaire 3D au dispositif informatique (409).

9. Dispositif d'utilisateur (105) selon la revendication 8, dans lequel le dispositif d'entrée est agencé de manière à générer et / ou obtenir un premier ensemble de données et un deuxième ensemble de données ; et
dans lequel le processeur est configuré de manière à prétraiter le premier ensemble de données tandis que le dispositif d'entrée est en train de générer et / ou obtenir le deuxième ensemble de données.

10. Dispositif d'utilisateur selon la revendication 8 ou 9, dans lequel le dispositif d'utilisateur (105) est agencé de manière à effectuer une analyse du temps de vol de la lumière émise et réfléchie pour déterminer la forme 3D de l'objet (102, 103, 104).

11. Dispositif d'utilisateur selon l'une quelconque des revendications 8 à 10, dans lequel le dispositif d'utilisateur (105) est configuré de telle sorte que la lumière émise par la source de lumière est une lumière structurée, et configuré de manière à déterminer la forme 3D de l'objet (102, 103, 104) sur la base de la lumière structurée réfléchie par l'objet (102, 103, 104) et reçue au niveau du récepteur de lumière.

12. Procédé de traitement de données, le procédé comprenant :
un dispositif d'utilisateur (105) émettant de la lumière vers un objet (102, 103, 104) ;
le dispositif d'utilisateur (105) recevant de la lumière émise par le dispositif d'utilisateur et réfléchie par l'objet (102, 103, 104) afin de générer des données d'image pour l'objet (102, 103, 104) ;
le dispositif d'utilisateur (105) effectuant un prétraitement des données d'image consistant à créer une image de maillage triangulaire 3D pour l'objet (102, 103, 104) à partir des données d'image ;
le dispositif d'utilisateur (105) transmettant les données d'image prétraitées pour l'image de maillage triangulaire 3D au dispositif informatique (409) ; et
le dispositif informatique (409) recevant les données prétraitées pour l'image de maillage triangulaire 3D de la part du dispositif d'utilisateur (105), et modélisant une surface de l'objet (102, 103, 104) capturé par les données d'image sur la base des données d'image de maillage triangulaire reçues.

13. Procédé selon la revendication 12, dans lequel le dispositif d'utilisateur (105) génère un premier ensemble de données d'image et un deuxième ensemble de données d'image, dans lequel le dispositif d'utilisateur (105) prétraite le premier ensemble de données d'image tout en générant le deuxième ensemble de données d'image.

14. Procédé selon la revendication 12 ou 13, dans lequel le dispositif d'utilisateur (105) effectue une analyse du temps de vol de la lumière émise et réfléchie pour déterminer la forme 3D de l'objet (102, 103, 104).

15. Procédé selon l'une quelconque des revendications 12 à 14, dans lequel la lumière émise par le dispositif d'utilisateur (105) est une lumière structurée, et dans lequel le dispositif d'utilisateur (105) détermine la forme 3D de l'objet (102, 103, 104) sur la base de la lumière structurée réfléchie par l'objet (102, 103, 104) et reçue au niveau du dispositif d'utilisateur (105) .
